# EUROPEAN PATENT SPECIFICATION

(11) **EP 2 050 593 B1**
(45) Date of publication and mention of the grant of the patent: **09.09.2009**
(21) Application number: 07425648.8
(22) Date of filing: 15.10.2007
(51) Int. Cl.: B60C 27/12

(54) **Anti-skid device with chain length adjustment system**
Gleitschutzvorrichtung mit Kettenlängeneinstellsystem
Dispositif anti-dérapage avec système de réglage de longueur de chaîne

(43) Date of publication of application: 22.04.2009
(73) Proprietor: Thule S.p.A., 23847 Molteno (Lecco) (IT)
(72) Inventor: Arrigoni Neri, Marco, 23811 Ballabio (Lecco) (IT); Farina, Luigi, 23843 Dolzago (Lecco) (IT); Necchi, Stefano, 23874 Montevecchia (IT)
(74) Representative: Petruzziello, Aldo

(56) References cited:
- EP-A- 0 351 362
- EP-A- 0 352 873
- EP-A- 1 160 103
- EP-A- 1 251 015

## Description

The present invention refers to an anti-skid device, commonly known as a snow chain, provided with a system for adjusting the chains length and in particular to an anti-skid device adapted to be mounted on the side of the wheel facing the outside of the vehicle. From EP-A2-1160103, an anti-skid device according to the preamble of claim 1 is known.

Known to the art are snow chains with mounting from the outside of the wheel, which comprise a central hub from which a plurality of arms or spokes, connected to a terminal element which embraces the tyre tread, protrude radially. The terminal elements of the spokes are connected to portions of chain, which follow the tyre tread. In this manner the portions of chain can scratch or bite into the sleet or the ice on the road surface to exert a greater friction and to avoid slipping or skidding of the tyres.

For mounting this type of snow chains, an adapter element is provided which is fixed to a wheel bolt or nut. A tensioning strap or chain, which passes through a tensioning/locking device in the form of a lever hinged to the hub of the snow chains, is fixed to the adapter element. The user thus pulls the tensioning strap manually or operates the tensioning device to bring the hub of the chains toward the wheel hub.

Such a type of snow chain presents drawbacks due to the portions of chain connected to the terminal elements of the spokes. In fact, said portions of chain form a substantially rigid ring on the tyre tread which cannot be loosened or tightened. Thus, said ring cannot be adapted to tyres of different sizes. Furthermore, said ring of portions or chain proves unsuitable when the thickness of the tyre is reduced due to the wear.

To overcome said drawbacks at least partially, a cylindrical rubber element which is applied by pressure between two links of two portions of chain, so as to bring the links together and thus to shorten the diameter generated by the rings of the portions of chain is known to the art. In this manner, when the user has to mount the chains, he manually widens the rings of chain so that the rubber element dilates elastically to be able to fit the chains on the tyre. Once the chain has been fitted on the tyre, the rubber elements return elastically to the original configuration so as to tension the chains on the tyre.

This known system for tensioning the portions of chain presents some drawbacks, due to the fact that a certain force is required to the user to widen the rings of chain and to dilate the rubber elements. Furthermore, the insertion of the rubber elements in the links of chain requires special tools, such as compressed air guns and the like, and can therefore be carried out only during the manufacturing of the chains. Furthermore, the rubber elements, once inserted in the chain links, cannot be removed.

Object of the present invention is to overcome at least part of the drawbacks of the prior art, by providing a snow chain with mounting from the outside of the wheel that is versatile and adapted to be applied on different types of tyres.

Another object is to provide such a snow chain that is practical and quick to mount and at the same time reliable and safe when the vehicle is travelling.

These objects are achieved in accordance with the invention with the characteristics listed in appended independent claim 1.

Advantageous embodiments of the invention are apparent from the dependent claims.

According to the invention, the anti-skid device with mounting from the outside of the wheel comprises:
- a plurality of arms protruding radially from a hub which is disposed on the outside of the wheel and is ending in terminal elements designed to be disposed on the tyre tread, and
- portions of chain connected to said terminal elements so as to form a ring on the tyre tread.

The anti-skid device according to the invention further comprises at least one adjustment device able to adapt the portions of chain to slightly different wheel diameters or even to compensate for the wear on the tyre, which leads to a reduction in the diameter of the wheel. The adjustment device comprises a screw provided with a shank inserted into the slots of two links of two portions of chain and elastic means disposed around the shank so as keep the links of chain apart.

The advantages of the adjustment device according to the invention are obvious in that it can be mounted and removed simply and easily, even by the end user, without the aid of special tools.

Further characteristics of the invention will be made clearer by the detailed description that follows, referring to a purely exemplifying and therefore non limiting embodiment thereof, illustrated in the appended drawings, wherein:
Figure 1 is a diagrammatic perspective view illustrating the outside of a wheel on which a snow chain according to the invention is mounted; and
Figure 2 is a top plan view of an adjustment device disposed between two portions of chain of the snow chains according to the invention.

The snow chain according to the invention, denoted as a whole with reference numeral 1, will be described with the aid of the figures.

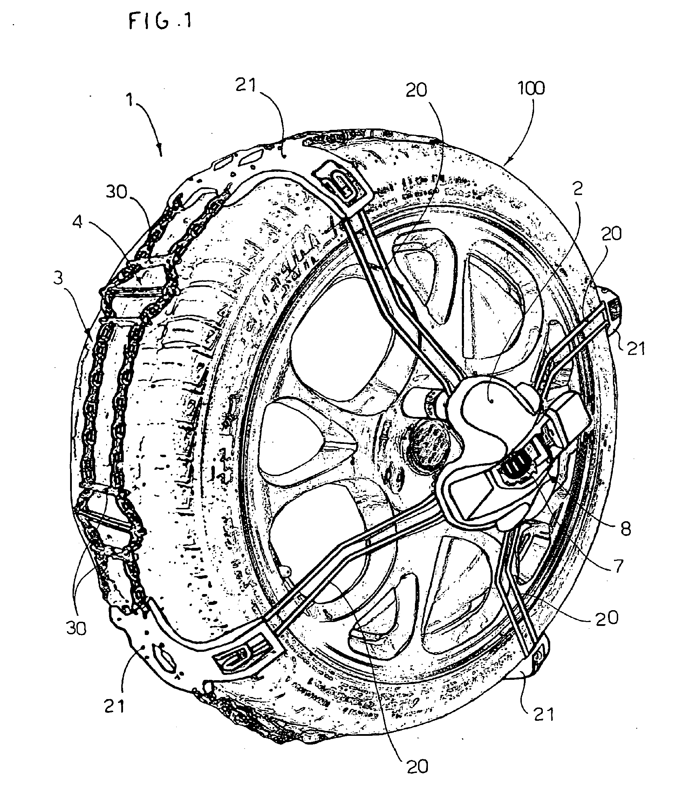

With reference for now to Figure 1, a snow chain 1 mounted on a wheel 100 is show. The chain 1 comprises a hub 2 designed to be disposed to coincide with the hub 101 of the wheel. Arms or spokes 20 protrude radially from the hub 2 of the snow chain. In the figures four arms 20, each consisting of a pair of suitably shaped metal rods, are illustrated.

The ends of the arms 20 are connected to respective terminal elements 21 bent with a radius of curvature that follows the edge of the tyre, so that the terminal elements 21 can be disposed on the tyre tread. Portions of chain 3 which are disposed in a ring along the tyre tread are connected to the terminal elements 21. By way of example, two portions of chain 3 disposed substantially parallel to each other are illustrated in the figure. The portions of chain 3 are joined to each other at suitable intervals and held in position by transverse plates 30 which are disposed edgeways on the tyre tread, so as to improve the friction with the road surface by biting into the ice or the snow.

An adjustment device 4 is placed between a pair of transverse plates 30 to adapt the portions of chain 3 to slightly different wheel diameters or even to compensate for the wear on the tyre, which leads to a reduction in wheel diameter.

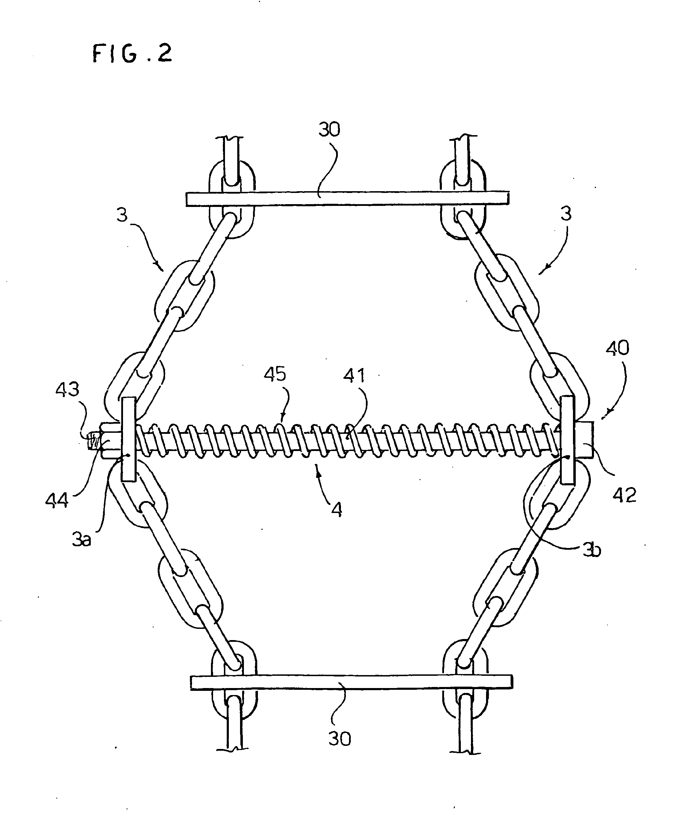

A shown better in Figure 2, the adjustment device 4 comprises a screw 40 having a shank 41 with a slightly smaller diameter than the slots of the links of the portions of chain 3 to be able to be inserted therein. The shank 41 is slightly longer than the transverse friction plates 30. The head 42 of the screw has a slightly larger diameter than the slots of the links of the chain 3. The end of the screw shank has a thread 43 to receive a nut 44 with a larger diameter than the slots of the links of the portions of chain 3. A helical screw 45, which works under compression, is disposed around the shank 41, which is preferably smooth.

The screw shank 41 is inserted into two links 3a and 3b of the portions of chain 3 and the nut 44 is screwed onto the threaded end 43 of the screw. Consequently, the ends of the spring 45 push the links 3a and 3b into abutment against the nut 44 and the head 42 of the screw, obtaining the greatest distancing between the links 3a and 3b of the two portions of chain 3. As a result, the diameter of the rings formed by the portions of chain 3 tends to shorten, always keeping the portions of chain 3 tensioned on the tyre

When the tyre undergoes a reduction in diameter due to the wear, or the chain 1 is mounted on a tyre with a slightly smaller diameter, an adjustment is made by unscrewing the bolt 44 on the threaded portion 43 of the screw 40, so as to bring the portions of chain 3a and 3b further apart through the action of the spring 45. In addition or as an alternative to this adjustment, another adjustment device 4, or a plurality of adjustment devices 4 suitably spaced apart from each other, can be inserted in the portions of chain 3.

Similarly, when the chain 1 is mounted on a tyre with a slightly larger diameter, an adjustment is made by screwing the bolt 44 onto the threaded part 43 of the screw 40, so as to bring the portions of chain 3a and 3b together against the action of the spring 45. In addition or as an alternative to said adjustment, one or more adjustment devices 4 can be eliminated from the portions of chain 3.

It is evident that the operations of insertion, of removal and of adjustment of the adjustment devices 4 are extremely simple and rapid.

Returning to Figure 1, the snow chains 1 comprise an adapter device 5 adapted to be fixed to a nut or bolt fixing the wheel 100. The end of a tensioning strap or chain 7, which is passed through the hub 2 of the snow chains, is fixed to the adapter device 5.
The strap 7 is connected to a tensioning device 8 constrained to the hub 2.

Numerous changes and modifications of detail within the reach of a person skilled in the art can be made to the present embodiment of the invention without thereby departing from the scope of the invention as set forth in the appended claims.

## Claims

1. An anti-skid device (1) with mounting from the outside of the wheel, comprising:
- a plurality of arms (20) protruding radially from a hub (2) which is disposed on the outside of the wheel and ends in terminal elements (21) designed to be disposed on the tyre tread, and
- portions of chain (3) joined to said terminal elements (21) so as to form a ring on the tyre tread,
at least one adjustment device (4) able to adapt the portions of chain (3) to slightly different wheel diameters or even to compensate for the wear on the tyre, which leads to a reduction in the diameter of the wheel, said adjustment device (4) comprising a screw (40) provided with a shank (41) inserted in the slots of two links (3a, 3b) of two portions of chain (3), **characterised in that** elastic means (45) are disposed around said shank (41) so as to keep the links of chain (3a, 3b) apart.

2. An anti-skid device (1) according to claim 1, **characterised in that** said adjustment device (4) is mounted removably in said links (3a, 3b) of the portions of chain (3).

3. An anti-skid device (1) according to claim 1 or 2, **characterised in that** said elastic means (45) comprise a helical spring disposed around said shank (41).

4. An anti-skid device (1) according to any one of the preceding claims, **characterised in that** said screw (40) has a threaded end (43) on which an adjustment nut (44) engages outside one of said links (3a).

5. An anti-skid device (1) according to any one of the preceding claims, **characterised in that** the shank (41) of said screw (40) has a smooth central part on which said elastic means (45) are disposed.

6. An anti-skid device (1) according to any one of the preceding claims, **characterised in that** said screw (40) has a head (42) with a larger diameter than the slots of said links (3b) of the portions of chain, so as to remain on the outside of one of said links (3b).

7. An anti-skid device (1) according to any one of the preceding claims, **characterised in that** said portions of chain (3) which form rings on the tread are joined to each other and kept in position by transverse plates (30) disposed edgeways on the tyre tread.

8. An anti-skid device (1) according to any one of the preceding claims, **characterised in that** it further comprises:
- an adapter device (5) adapted to be fixed to a bolt or nut fixing the wheel, to which is secured the end of a tensioning strap or chain (7) which passes through the hub (2) of the anti-skid device to be tensioned by the user, so as to bring the hub (2) of the anti-skid device close to the wheel hub (101), and
- a device (8) connected to said hub (2) of the anti-skid device, adapted to be operated by the user, to block said tensioning strap (7).

## Patentansprüche

1. Gleitschutzvorrichtung (1) mit Anbringung von der Außenseite des Rads, umfassend:
- mehrere Arme (20), die radial von einer Nabe (2) vorstehen, welche auf der Außenseite des Rads angeordnet ist und in Abschlusselementen (21) endet, die zur Anordnung auf der Reifenlauffläche ausgelegt sind, und
- Kettenabschnitte (3), die derart mit den Abschlusselementen (21) verbunden sind, dass sie einen Ring auf der Reifenlauffläche ausbilden,
zumindest eine Einstellvorrichtung (4), die imstande ist, die Kettenabschnitte (3) auf geringfügig unterschiedliche Raddurchmesser anzupassen oder sogar die Abnutzung des Reifens ausgleichen, die eine Verringerung des Durchmessers des Rads zur Folge hat, wobei die Einstellvorrichtung (4) eine Schraube (40) umfasst, die mit einem Schaft (41) versehen ist, der in die Schlitze von zwei Gliedern (3a, 3b) von zwei Kettenabschnitten (3) eingefügt ist, **dadurch gekennzeichnet, dass** elastische Mittel (45) um den Schaft (41) angeordnet sind, um die Kettenglieder (3a, 3b) auseinanderzuhalten.

2. Gleitschutzvorrichtung (1) nach Anspruch 1, **dadurch gekennzeichnet, dass** die Einstellvorrichtung (4) abnehmbar in den Gliedern (3a, 3b) der Kettenabschnitte (3) angebracht ist.

3. Gleitschutzvorrichtung (1) nach einem der Ansprüche 1 oder 2, **dadurch gekennzeichnet, dass** die elastischen Mittel (45) eine Schraubenfeder umfassen, die um den Schaft (41) angeordnet ist.

4. Gleitschutzvorrichtung (1) nach einem der vorhergehenden Ansprüche, **dadurch gekennzeichnet, dass** die Schraube (40) ein gewindetes Ende (43) aufweist, an dem eine Einstellmutter (44) außen eines der Glieder (3a) in Eingriff nimmt.

5. Gleitschutzvorrichtung (1) nach einem der vorhergehenden Ansprüche, **dadurch gekennzeichnet, dass** der Schaft (40) der Schraube (40) einen glatten Mittelteil aufweist, auf dem die elastischen Mittel (45) angeordnet sind.

6. Gleitschutzvorrichtung (1) nach einem der vorhergehenden Ansprüche, **dadurch gekennzeichnet, dass** die Schraube (40) einen Kopf (42) mit einem größeren Durchmesser als die Schlitze der Glieder (3b) der Kettenabschnitte aufweist, um auf der Außenseite von einem der Glieder (3b) zu verbleiben.

7. Gleitschutzvorrichtung (1) nach einem der vorhergehenden Ansprüche, **dadurch gekennzeichnet, dass** die Kettenabschnitte (3), die Ringe auf der Lauffläche ausbilden, miteinander verbunden und durch quer verlaufende Platten (30) festgehalten sind, welche hochkant auf der Reifenlauffläche angeordnet sind.

8. Gleitschutzvorrichtung (1) nach einem der vorhergehenden Ansprüche, **dadurch gekennzeichnet, dass** sie ferner Folgendes umfasst:
- eine Anpassungsvorrichtung (5), die dazu geeignet ist, an einem Bolzen oder einer Mutter befestigt zu sein, der bzw. die das Rad befestigt, und an der das Ende eines/einer Spannriemens oder -kette (7) gesichert ist, der bzw. die die Nabe (2) der Gleitschutzvorrichtung durchläuft, zur Spannung durch den Benutzer, um die Nabe (2) der Gleitschutzvorrichtung eng an die Radnabe (101) zu bringen, und
- eine Vorrichtung (8), die mit der Nabe (2) der Gleitschutzvorrichtung verbunden ist und dazu geeignet ist, vom Benutzer zum Blockieren des Spannriemens (7) betätigt zu sein.

## Revendications

1. Dispositif antidérapant (1) avec montage depuis l'extérieur de la roue, comprenant :
- une pluralité de bras (20) faisant saillie radialement à partir d'un moyeu (2) disposé du côté extérieur de la roue et se terminant en des éléments finaux (21) conçus pour être disposés sur la bande de roulement du pneu, et
- des portions de chaîne (3) reliés auxdits éléments finaux (21) de manière à former un anneau sur la bande de roulement du pneu,
- au moins un dispositif d'ajustement (4) capable de s'adapter aux portions de chaîne (3) avec des diamètres de roue légèrement différents, ou même de compenser l'usure du pneu, résultant dans une réduction du diamètre de la roue, ledit dispositif d'ajustement (4) comprenant une vis (40) pourvue d'une tige (41) insérée dans les fentes de deux éléments intermédiaires (3a, 3b) de deux portions de chaîne (3), **caractérisé en ce que** des moyens élastiques (45) sont disposés autour de ladite tige (41), de manière à maintenir à distance les éléments intermédiaires de la chaîne (3a, 3b).

2. Dispositif antidérapant (1) selon la revendication 1, **caractérisé en ce que** ledit dispositif d'ajustement (4) est monté de façon amovible dans lesdits éléments intermédiaires (3a, 3b) des portions de chaîne (3).

3. Dispositif antidérapant (1) selon l'une des revendications 1 ou 2, **caractérisé en ce que** lesdits moyens élastiques (45) comprennent un ressort hélicoïdal disposé autour de ladite tige (41).

4. Dispositif antidérapant (1) selon l'une quelconque des revendications précédentes, **caractérisé en ce que** ladite vis (40) possède une extrémité filetée (43), sur laquelle s'engage un écrou d'ajustement (44), du côté extérieur de l'un desdits éléments intermédiaires (3a).

5. Dispositif antidérapant (1) selon l'une quelconque des revendications précédentes, **caractérisé en ce que** la tige (41) de ladite vis (40) possède une partie centrale lisse, sur laquelle sont disposés les moyens élastiques (45).

6. Dispositif antidérapant (1) selon l'une quelconque des revendications précédentes, **caractérisé en ce que** ladite vis (40) possède une tête (42) avec un diamètre supérieur à celui des fentes desdits éléments intermédiaires (3b) des portions de chaîne, de manière à rester du côté extérieur de l'un desdits éléments intermédiaires (3b).

7. Dispositif antidérapant (1) selon l'une quelconque des revendications précédentes, **caractérisé en ce que** lesdites portions de chaîne (3) formant des anneaux sur la bande de roulement sont reliées les unes aux autres et maintenues en position par des plaques transversales (30) disposées latéralement sur la bande de roulement du pneu.

8. Dispositif antidérapant (1) selon l'une quelconque des revendications précédentes, **caractérisé en ce qu'**il comprend en outre :
- un dispositif d'adaptation (5), adapté pour être fixé à un boulon ou à un écrou fixant la roue, auquel est reliée l'extrémité d'une courroie ou chaîne de serrage (7) passant à travers le moyen (2) du dispositif antidérapant, susceptible d'être tendue par l'utilisateur, de manière à rapprocher le moyeu (2) du dispositif antidérapant du moyeu de roue (101), et
- un dispositif (8) raccordé audit moyeu (2) du dispositif antidérapant, adapté pour être actionné par l'utilisateur, pour bloquer ladite courroie de serrage (7).
